# EUROPEAN PATENT APPLICATION

(11) **EP 4 254 648 A1**
(43) Date of publication of application: **04.10.2023**
(21) Application number: 22880104.9
(22) Date of filing: 20.09.2022
(51) Int. Cl.: H01M 50/627, H01M 50/645, H01M 50/26, H01M 50/242

(54) **GLUE POURING STRUCTURE AND BATTERY MODULE PROVIDED WITH GLUE POURING STRUCTURE**

(30) Priority: 12.10.2021 CN 202122450219 U
(71) Applicant: Contemporary Amperex Technology Co., Limited, Ningde, Fujian 352100 (CN)
(72) Inventor: YU, Lei, Ningde, Fujian 352100 (CN)
(74) Representative: Gong, Jinping
(86) International application number: PCT/CN2022/119952
(87) International publication number: WO 2023/061164

(57) **Abstract**

This application relates to a potting structure (20) and a battery module (100). The potting structure (20) includes: a box (21) in which an accommodation cavity (211) is provided. An accommodation opening (212) that communicates with the accommodation cavity (211) is made on an end face (215) of the box (21) in a first direction. A potting channel (216) is further provided in the box (21). The accommodation cavity (211) includes a bottom wall (213) opposite to the accommodation opening (212) and a sidewall (214) connected to the bottom wall (213). The potting channel (216) includes a potting inlet (2163) formed on the end face (215) and a potting outlet (2164) formed on the sidewall (214). The potting structure (20) and battery module (100) do not require an outlet of the potting structure (20) to be aligned with an inlet of the glue holding space. Instead, after the cell assembly (10) is put into the box (21) of the potting structure (20), the glue enters the glue holding space directly through the potting channel (216), where the glue holding space is formed between the cell assembly (10) and the box (21). The glue bonds the cell assembly (10) and the box (21) after being cured in the glue holding space, thereby facilitating the potting process. In addition, the glue enters the glue holding space directly through the potting channel (216), thereby preventing the glue from overflowing from a clearance between the outlet and the inlet.

## Description

### CROSS-REFERENCE TO RELATED APPLICATIONS

This application claims priority to Chinese Patent Application No. 202122450219.X, filed on October 12, 2021 and entitled "POTTING STRUCTURE AND BATTERY MODULE CONTAINING SAME", which is incorporated herein by reference in its entirety.

### TECHNICAL FIELD

This application relates to the technical field of new energy, and in particular, to a potting structure and a battery module containing the potting structure.

### BACKGROUND

A battery module is a structure formed by connecting battery cells in series and parallel to obtain an assembly and then mounting a stand-alone battery monitoring and management device on the assembly. The battery module needs to be able to support, fix, and protect the battery cells included in the battery module. A glue poured into the battery module exerts a cushioning effect against mechanical collision or wobbling of the battery module, and therefore, plays an important role in protecting the battery cell.

However, the potting process performed with a conventional potting structure is prone to inconvenience of potting and overflow of glue.

### SUMMARY

In view of the problems of a conventional potting structure characterized by inconvenience of potting and overflow of glue, it is necessary to provide a potting structure to facilitate a potting process and alleviate an overflow risk and a battery module containing the potting structure.

A potting structure is disclosed, including a box in which an accommodation cavity is provided. An accommodation opening that communicates with the accommodation cavity is made on an end face of the box in a first direction.

A potting channel is further provided in the box, the accommodation cavity includes a bottom wall opposite to the accommodation opening and a sidewall connected to the bottom wall, and the potting channel includes a potting inlet formed on the end face and a potting outlet formed on the sidewall.

In the technical solution in an embodiment of this application, the outlet of the potting structure does not need to be aligned with the inlet of the glue holding space. Instead, after the cell assembly is put into the box of the potting structure, the glue enters the glue holding space directly through the potting channel, where the glue holding space is formed between the cell assembly and the box. The glue bonds the cell assembly and the box after being cured in the glue holding space, thereby facilitating the potting process. In addition, the glue enters the glue holding space directly through the potting channel, thereby preventing the glue from overflowing from a clearance between the outlet and the inlet.

In an embodiment, there are at least two potting channels, and all the potting channels are arranged at intervals on a periphery of the accommodation cavity to facilitate quick potting.

In an embodiment, all the potting channels are arranged at equal intervals on the periphery of the accommodation cavity, so as to achieve equal potting speeds at all positions and ensure uniformity of potting.

In an embodiment, the potting outlet is provided on the sidewall at an end connected to the bottom wall, so as to facilitate flowing of the glue from the bottom to the accommodation cavity, and prevent the glue from splashing under the effect of gravity.

In an embodiment, a cross-sectional shape of the potting channel is circular, so as to facilitate flowing of the glue in the potting channel.

In an embodiment, the potting channel includes a first channel and a second channel that communicate with each other, where the first channel extends along the first direction and includes the potting inlet, and the second channel includes the potting outlet.

An angle between the first channel and the second channel is greater than 90°.

This prevents the glue from being retained on the wall at a junction between the first channel and the second channel during shearing, and reduces deposition of the glue in the channel.

In an embodiment, the potting structure further includes a glue retaining strip. The glue retaining strip is disposed on the sidewall of the accommodation cavity. In this way, the height of the potting glue can be determined by visually checking whether floating glue exists on an upper surface of the glue retaining strip. In addition, the glue retaining strip can be used as a reference height of the poured glue, and it is determined that the height of the glue meets requirements when the height of the glue reaches the glue retaining strip (for example, when the poured glue is flush with the upper surface of the glue retaining strip).

In an embodiment, in a circumferential direction around the accommodation opening, the glue retaining strip is disposed on all surrounding sidewalls. All the glue retaining strips are at equal distances from the bottom wall, so as to facilitate observation of the glue height from all sides.

In an embodiment, the glue retaining strip is detachably connected to the sidewall to meet requirements on different glue heights.

In an embodiment, a surface of the glue retaining strip, away from the bottom wall, is at a preset distance from the end face, so as to prevent the glue from overflowing from the surface of the glue retaining strip when a surface of the glue retaining strip is flush with or higher than the end face, where the surface is away from the bottom wall.

In an embodiment, the box is of a hollow cuboidal structure opened at one end. A cross-sectional shape of the accommodation cavity sectioned along a line perpendicular to the first direction is rectangular, and an opening end of the cuboidal structure forms the accommodation opening, so as to facilitate processing and manufacturing.

In an embodiment, the potting structure further includes a sealing plug. The sealing plug is configured to be pluggable into the potting channel through the potting inlet, so as to prevent the glue from overflowing from the potting inlet to the outside.

A battery module, including a cell assembly, a cover plate, and the potting structure according to any one of the technical solutions described above. The cell assembly is disposed in the accommodation cavity through the accommodation opening. The cell assembly abuts on a part of the bottom wall. The cell assembly, a remaining part of the bottom wall, and the sidewall define and form a glue holding space. Glue enters the glue holding space through the potting channel to bond the cell assembly and the box. The cover plate covers and fits the box.

In the technical solution in an embodiment of this application, the outlet of the potting structure does not need to be aligned with the inlet of the glue holding space. Instead, after the cell assembly is put into the box of the potting structure, the glue enters the glue holding space directly through the potting channel, where the glue holding space is formed between the cell assembly and the box. The glue bonds the cell assembly and the box after being cured in the glue holding space, thereby facilitating the potting process. In addition, the glue enters the glue holding space directly through the potting channel, thereby preventing the glue from overflowing from a clearance between the outlet and the inlet.

### BRIEF DESCRIPTION OF DRAWINGS

To describe the technical solutions in some embodiments of this application or the related art more clearly, the following outlines the drawings to be used in the description of some embodiments of this application or the related art. Evidently, the drawings outlined below are merely some embodiments of this application. A person of ordinary skill in the art may derive other drawings from the disclosed drawings without making any creative efforts. In the drawings:
FIG. 1 is an exploded view of a battery module according to some embodiments of this application;
FIG. 2 is an axonometric drawing of a potting structure of the battery module shown in FIG. 1;
FIG. 3 is a top view of the potting structure shown in FIG. 2;
FIG. 4 is a side view of the potting structure shown in FIG. 2;
FIG. 5 is a front view of the potting structure shown in FIG. 2; and
FIG. 6 is an assembling drawing of the battery module shown in FIG. 1.

The drawings are not drawn to scale.

List of reference numerals:
100. battery module; 10. cell assembly; 20. potting structure; 21. box; 211. accommodation cavity; 212. accommodation opening; 213. bottom wall; 214. sidewall; 215. end face; 216. potting channel; 2161. first channel; 2162. second channel; 2163. potting inlet; 2164. potting outlet; 22. glue retaining strip; 30. cover plate.

### DETAILED DESCRIPTION OF EMBODIMENTS

The following describes the technical solutions in some embodiments of this application clearly in detail with reference to the drawings appended hereto. Evidently, the described embodiments are merely a part of but not all of the embodiments of this application. All other embodiments derived by a person of ordinary skill in the art based on the embodiments of the present invention without making any creative effort fall within the protection scope of the present invention.

Understandably, in the description of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of this application, but not intended to indicate or imply that the mentioned device or component must be located in the specified direction or constructed or operated in the specified direction. Therefore, such terms are not intended as a limitation on this application.

In addition, the technical terms such as "first" and "second" are used merely for ease of description, but not to indicate or imply relative importance or implicitly specify the number of technical features mentioned. Therefore, the features preceded by "first" or "second" may explicitly or implicitly include at least one of such features. In the description of this application, unless otherwise expressly specified, "a plurality of" means at least two, for example, two, three, or more.

In this application, unless otherwise expressly specified and qualified, the terms such as "mounting", "concatenation", "connection", and "fixing" need to be understood in a broad sense, for example, understood as a fixed connection or a detachable connection or understood as being integrated into a whole; or understood as a mechanical connection or an electrical connection, a direct connection or an indirect connection implemented through an intermediary; or understood as interior communication between two components or interaction between two components. A person of ordinary skill in the art is able to understand the specific meanings of the terms in this application according to specific situations.

In this application, unless otherwise expressly specified and qualified, a first feature being "on" or "under" a second feature may be that the first feature is in direct contact with the second feature, or the first feature is in indirect contact with the second feature through an intermediary. In addition, a first feature being "on", "above", or "over" a second feature may mean that the first feature is directly above or obliquely above the second feature, or just mean that the first feature is at an altitude higher than the second feature. A first feature being "under", "below", or "beneath" a second feature may mean that the first feature is directly under or obliquely under the second feature, or just mean that the first feature is at an altitude lower than the second feature.

It is hereby noted that a component referred to as being "fixed to" or "disposed on" another component may be directly fixed onto the other component or may be fixed onto or disposed on the other component through an intermediate component. A component considered to be "connected to" another component may be directly connected to the other component or may be connected to the other component through an intermediate component. The terms "vertical", "horizontal", "up", "down", "left", "right", and other similar expressions used herein are merely for ease of description, but are not intended as a unique implementation.

As mentioned in the background technology, in some circumstances, the potting process performed with a potting structure is prone to inconvenience of potting and overflow of glue.

During the development of this application, it is found that a reason for the above problem is that in a potting process in some circumstances, an outlet of the potting structure needs to be aligned with an inlet of a glue holding space in which the glue needs to be poured. When the glue is poured into the potting structure, the glue flows into the corresponding glue holding space through the inlet of the glue holding space from the outlet of the potting structure. The inconvenience of potting is just brought by the need of aligning the outlet of the potting structure with the inlet of the corresponding glue holding space before the glue is poured in the potting process. In addition, the glue is prone to overflow from the clearance between the outlet and the inlet, thereby causing a risk of overflow.

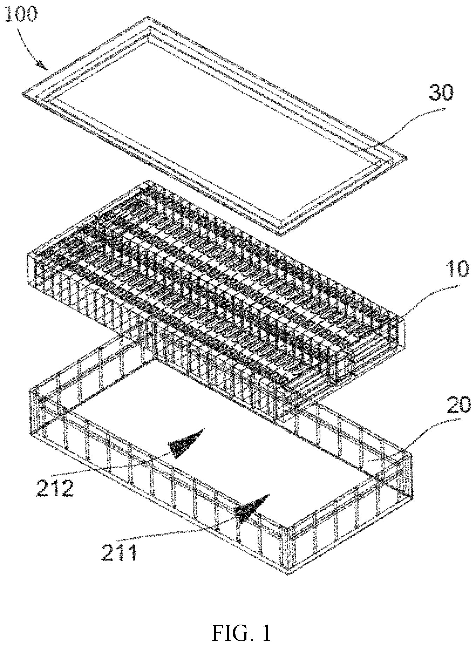

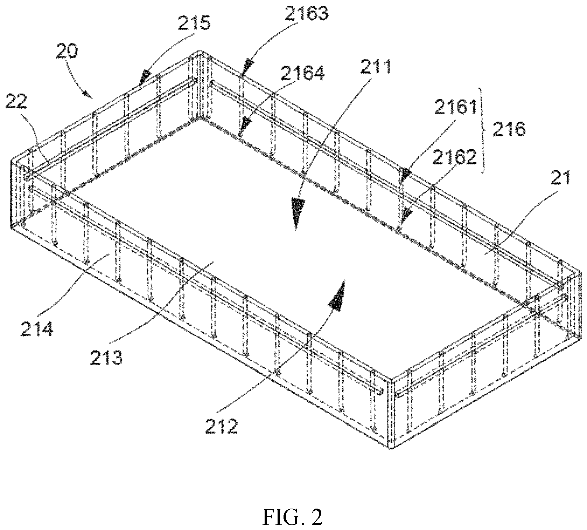

Referring to FIG. 1 and FIG. 2, some embodiments of this application provide a battery module 100, including a cell assembly 10 and a potting structure 20. The potting structure 20 includes a box 21. In the box 21, an accommodation cavity 211 is provided. An accommodation opening 212 that communicates with the accommodation cavity 211 is made on an end face 215 of the box 21 in a first direction. The cell assembly 10 is put into the accommodation cavity 211 through the accommodation opening 212. Referring to FIG. 1, the first direction is a height direction in FIG. 1.

In some embodiments, the accommodation cavity 211 includes a bottom wall 213 opposite to the accommodation opening 212 and a sidewall 214 connected to the bottom wall 213. When being put in the accommodation cavity 211, the cell assembly 10 abuts on a part of the bottom wall 213 of the accommodation cavity 211. The cell assembly 10, a remaining part of the bottom wall 213, and the sidewall 214 define and form a glue holding space. In a specific embodiment, a width of the glue holding space is 4 millimeters (mm), that is, a dimension of the glue holding space in a direction perpendicular to the first direction is 4 mm. Understandably, in some other embodiments, the width of the glue holding space is not particularly limited. For example, the width of the glue holding space may be 3 mm, 5 mm, or the like.

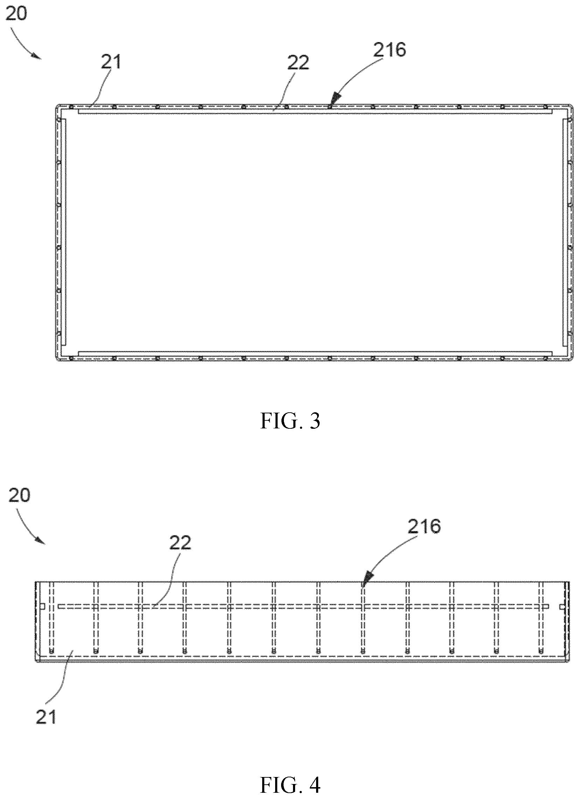

Referring to FIG. 3 to FIG. 5, a potting channel 216 is further provided in the box 21. The potting channel 216 includes a potting inlet 2163 and a potting outlet 2164. The potting inlet 2163 is formed on the end face 215 on which an accommodation opening 212 is made. The accommodation outlet 2164 is formed on the sidewall 214 of the accommodation cavity 211. The glue enters the potting channel 216 through the potting inlet 2163, flows out from the potting outlet 2164 into the glue holding space, and is cured in the glue holding space to bond the cell assembly 10 and the box 21. When the battery module 100 is mechanically colliding or wobbling, the glue can exert a cushioning effect, so as to protect the cell assembly 10.

The battery module 100 according to an embodiment of this application does not require an outlet of the potting structure 20 to be aligned with an inlet of the glue holding space. Instead, after the cell assembly 10 is put into the box 21 of the potting structure 20, the glue enters the glue holding space directly through the potting channel 216, and bonds the cell assembly 10 and the box 21 after being cured in the glue holding space, thereby facilitating the potting process. In addition, the glue enters the glue holding space directly through the potting channel 216, thereby preventing the glue from overflowing from a clearance between the outlet and the inlet.

It is hereby noted that the cell assembly 10 is a structure formed by connecting a plurality of battery cells in series-and-parallel pattern. The glue poured into the glue holding space through the potting channel 216 may be any one-component or two-component potting glue. That is, the type of the glue poured into the glue holding space through the potting channel 216 falls within a very broad range, and is not particularly limited.

In a specific embodiment, the box 21 is of a hollow cuboidal structure opened at one end. A cross-sectional shape of the accommodation cavity 211 sectioned along a line perpendicular to the first direction is rectangular, and an opening end of the cuboidal structure forms an accommodation opening 212. The potting inlet 2163 of the potting channel 216 is provided on an end face 215 of the opening end of the cuboidal structure. The hollow cuboidal box 21 facilitates processing and manufacturing.

In some embodiments, the cell assembly 10 is of a cuboidal block structure to match the shape of the accommodation cavity 211, so as to form a glue holding space around the cell assembly 10. In a potting process, the whole glue holding space around the cell assembly 10 is filled with glue, so that the cell assembly 10 fixed to the box 21 by glue on all sides.

Understandably, in some other embodiments, the structures of the box 21 and the cell assembly 10 are not particularly limited. For example, the box 21 may be a hollow cylindrical structure opened at one end. Correspondingly, the cell assembly 10 is in a solid cylindrical shape.

Still referring to FIG. 2 and FIG. 3, a cross-sectional shape of the potting channel 216 is circular, so as to facilitate flowing of the glue in the potting channel 216. In some embodiments, a diameter of the potting channel 216 is 4 mm. Definitely, in some other embodiments, the cross-sectional shape of the potting channel 216 may be other shapes such as an ellipse. The potting outlet 2164 is provided on the sidewall 214 at an end connected to the bottom wall 213, so as to make it convenient for the glue to gradually fill the glue holding space from the bottom of the glue holding space, and prevent the glue from splashing under the effect of gravity. Understandably, in some other embodiments, the potting outlet 2164 may be provided on the sidewall 214 at an end away from the bottom wall 213.

In an embodiment, there are at least two potting channels 216. All the potting channels 216 are arranged at intervals on the periphery of the accommodation cavity 211. In a specific embodiment, when the box 21 is of a hollow cuboidal structure opened at one end, the potting channel 216 is provided on all the four sidewalls 214 of the box 21 so that the glue can conveniently flow from the surrounding potting channels 216 into a nearby glue holding space. In some embodiments, a plurality of potting channels 216 are provided on each sidewall 214, so as to quickly pour the glue into the glue holding space through the plurality of potting channels 216.

Definitely, in some other embodiments, one potting channel 216 may be provided alone, and the potting channel 216 may be provided on any one of the sidewalls 214. Alternatively, two potting channels 216 may be provided, and the two potting channels 216 may be provided on the same sidewall 214, or provided on any two sidewalls 214 among the four sidewalls 214. Alternatively, three potting channels 216 may be provided, and the three potting channels 216 may be provided on the same sidewall 214, or provided on any three sidewalls 214 among the four sidewalls 214. Alternatively, one potting channel 216 is provided on each sidewall 214, without being particularly limited herein.

Further, all the potting channels 216 are arranged at equal intervals on the periphery of the accommodation cavity 211, so as to achieve equal potting speeds at all positions of the glue holding space and ensure uniformity of potting. Understandably, in some other embodiments, the potting channels 216 may be arranged at unequal intervals on the periphery of the accommodation cavity 211 instead, without being particularly limited herein.

In an embodiment, the potting channel 216 includes a firs channel 2161 and a second channel 2162 that communicate with each other. The first channel 2161 extends along the first direction and includes a potting inlet 2163, and the second channel 2162 includes a potting outlet 2164. An angle between the first channel 2161 and the second channel 2162 is greater than 90°, so as to prevent the glue from being retained on the wall at a junction between the first channel 2161 and the second channel 2162 during shearing, and reduce deposition of the glue in the channel. Conceivably, in some other embodiments, the angle between the first channel 2161 and the second channel 2162 may be 90° or less than or equal to 90°.

In an embodiment, the potting structure 20 further includes a glue retaining strip 22. The glue retaining strip 22 is disposed on the sidewall 214 of the accommodation cavity 211. The cell assembly 10 abuts on, or is by a specified gap apart from, the glue retaining strip 22. The height of the glue poured in the glue holding space can be determined by visually checking whether floating glue exists on an upper surface of the glue retaining strip 22. In addition, the glue retaining strip 22 may be used as a reference height of the glue poured in the glue holding space, and it is determined that the height of the glue meets requirements when the height of the glue in the glue holding space reaches the glue retaining strip 22 (for example, when the glue is flush with the upper surface of the glue retaining strip 22).

In some embodiments, the glue retaining strip 22 is generally made of foam. In other embodiments, the material of the glue retaining strip 22 is not limited. Generally, a thickness of the glue retaining strip 22 is 1 mm to 2 mm. That is, the height by which the glue retaining strip 22 protrudes beyond the sidewall 214 is 1 mm to 2 mm, so as to prevent interference with the cell assembly 10. Definitely, in some other embodiments, the thickness of the glue retaining strip 22 may be other values such as a value less than 1 mm, or a value greater than 2 mm.

In an embodiment, the glue retaining strip 22 is detachably connected to the sidewall 214 so as to change the position of a junction between the glue retaining strip 22 and the sidewall 214 to meet different height requirements on the filler glue in the glue holding space. In some embodiments, the glue retaining strip 22 is bonded to the sidewall 214 by a binder. For example, a back glue is applied onto the back of the glue retaining strip 22. The glue retaining strip 22 is affixed onto the sidewall 214 by the back glue. Understandably, in some other embodiments, the glue retaining strip 22 may be connected to the side wall 214 in other ways instead, for example, by making threaded holes on the glue retaining strip 22 and the side wall 214 separately and passing a screw through the threaded holes on the glue retaining strip 22 and the side wall 214, so as to fix the glue retaining strip 22 to the side wall 214 together. The position of the glue retaining strip 22 relative to the side wall 214 may be changed by: unscrewing the screw from the existing threaded holes on the glue retaining strip 22 and the side wall 214, aligning the threaded hole on the glue retaining strip 22 with a newly selected threaded hole on the sidewall 214, and passing the screw through the threaded hole on the glue retaining strip 22 and the newly selected threaded hole on the sidewall 214 to fix the glue retaining strip and the sidewall together. In this way, the position of the junction between the glue retaining strip 22 and the sidewall 214 is changed. Further, a surface of the glue retaining strip 22, away from the bottom wall 213, is at a preset distance from the end face 215 on which an accommodation opening 212 is made, so as to prevent the glue from overflowing from the surface of the glue retaining strip 22 when a surface of the glue retaining strip 22 is flush with the end face 215 or higher than the end face 215, where the surface is away from the bottom wall 213. Definitely, in some other embodiments, it is also possible that the surface of the glue retaining strip 22, away from the bottom wall 213, is flush with the end face 215 on which the accommodation opening 212 is made.

In an embodiment, in a circumferential direction around the accommodation opening 212, the glue retaining strip 22 is disposed on all surrounding sidewalls 214. All the glue retaining strips 22 are at equal distances from the bottom wall 213, so as to facilitate observation of the glue height from all sides. Understandably, in other embodiments, the glue retaining strip 22 may be disposed on the sidewall 214 on only one side; or the glue retaining strip 22 may be disposed on the sidewalls 214 on only two sides, and all the glue retaining strips 22 are at equal distances from the bottom wall 213, so that the height of the glue can be observed from two sides; or, the glue retaining strip 22 may be disposed on the sidewalls on only three sides, and all the glue retaining strips 22 are at equal distances from the bottom wall 213, so that the height of the glue can be observed from three sides.

In an embodiment, the potting structure 20 further includes a sealing plug. After completion of potting, the sealing plug can be hermetically plugged into the potting channel 216 through the potting inlet 2163, so as to prevent the glue from overflowing from the potting inlet 2163 to the outside. Specifically, the sealing plug is a rubber plug. Understandably, in some other embodiments, the type of the sealing plug is not limited. For example, the sealing plug may be a silicone plug.

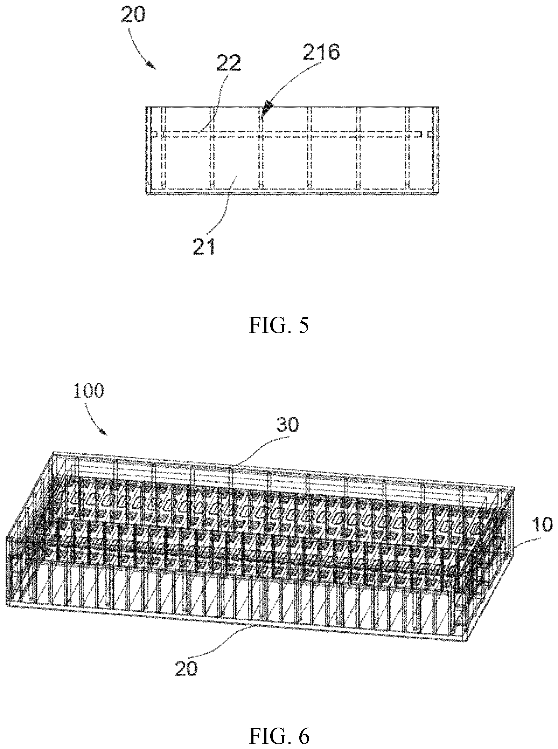

In a specific embodiment, the number of sealing plugs is equal to the number of potting channels 216. To be specific, one sealing plug is plugged in the potting inlet 2163 of each potting channel 216. In another specific embodiment, there may be just one sealing plug. To be specific, the sealing plugs that are plugged in the potting inlets 2163 of all the potting channels 216 are formed in one piece. The one-piece sealing plug can be plugged in the potting inlets 2163 of all the potting channels 216 to prevent the glue from overflowing from the potting inlets 2163 to the outside. Still referring to FIG. 1 together with FIG. 6, the battery module 100 further includes a cover plate 30. The cover plate 30 is disposed on the box 21 to protect the cell assembly 10.

Steps of assembling the battery module 100 according to an embodiment of this application may include:
affixing a glue retaining strip 22 into a box 21 based on a potting requirement;
placing the box 21 on an operating surface;
putting a cell assembly 10 into the box vertically so that the cell assembly 10 and the box 21 form a glue holding space;
pouring glue into the glue holding space through a potting channel 216, and visually checking whether floating glue exists on an upper surface of the glue holding space 22, so as to determine whether the glue in the glue holding space meets requirements;
plugging the sealing plug is into the potting channel 216 after completion of the potting; and
covering box 21 with the cover plate 30 to complete the assembling.

Another embodiment of this application further provides a potting structure 20 included in the battery module 100. The potting structure 20 includes a box 21. In the box 21, an accommodation cavity 211 is provided. An accommodation opening 212 that communicates with the accommodation cavity 211 is made on an end face 215 of the box 21 in a first direction. A potting channel 216 is further provided in the box 21. The accommodation cavity 211 includes a bottom wall 213 opposite to the accommodation opening 212 and a sidewall 214 connected to the bottom wall 213. The potting channel 216 includes a potting inlet 2163 formed on the end face 215 and a potting outlet 2164 formed on the sidewall 214.

When applied to a battery module 100, the potting structure 20 does not require an outlet of the potting structure 20 to be aligned with an inlet of the glue holding space. Instead, after the cell assembly 10 is put into the box 21 of the potting structure 20, the glue enters the glue holding space directly through the potting channel 216, where the glue holding space is formed between the cell assembly 10 and the box 21. The glue bonds the cell assembly 10 and the box 21 after being cured in the glue holding space, thereby facilitating the potting process. In addition, the glue enters the glue holding space directly through the potting channel 216, thereby preventing the glue from overflowing from a clearance between the outlet and the inlet.

The technical features in the foregoing embodiments may be combined arbitrarily. For brevity, not all possible combinations of the technical features in the embodiments are described. However, to the extent that no conflict exists, all such combinations of the technical features are considered falling within the scope hereof.

The foregoing embodiments merely describe several implementations of this application. The description is relatively detailed, but constitutes no limitation on the patent scope hereof. It is hereby noted that several variations and improvements, which may be made to the embodiments by a person of ordinary skill in the art without departing from the concept of this application, fall within the protection scope of this application. Therefore, the protection scope of this application is subject to the claims appended hereto.

## Claims

1. A potting structure, comprising:
a box (21) in which an accommodation cavity (211) is provided, wherein an accommodation opening (212) that communicates with the accommodation cavity (211) is made on an end face (215) of the box (21) in a first direction; and
a potting channel (216) is further provided in the box (21), the accommodation cavity (211) comprises a bottom wall (213) opposite to the accommodation opening (212) and a sidewall (214) connected to the bottom wall (213), and the potting channel (216) comprises a potting inlet (2163) formed on the end face (215) and a potting outlet (2164) formed on the sidewall (214).

2. The potting structure according to claim 1, wherein, there are at least two potting channels (216), and all the potting channels (216) are arranged at intervals on a periphery of the accommodation cavity (211).

3. The potting structure according to claim 2, wherein all the potting channels (216) are arranged at equal intervals on the periphery of the accommodation cavity (211).

4. The potting structure according to any one of claims 1 to 3, wherein the potting outlet (2164) is provided on the sidewall (214) at an end connected to the bottom wall (213).

5. The potting structure according to any one of claims 1 to 4, wherein a cross-sectional shape of the potting channel (216) is circular.

6. The potting structure according to any one of claims 1 to 5, wherein, the potting channel (216) comprises a first channel (2161) and a second channel (2162) that communicate with each other, wherein the first channel extends along the first direction and comprises the potting inlet (2163), and the second channel comprises the potting outlet (2164); and
an angle between the first channel (2161) and the second channel (2162) is greater than 90°.

7. The potting structure according to any one of claims 1 to 6, wherein, the potting structure further comprises a glue retaining strip (22), and the glue retaining strip (22) is disposed on the sidewall (214) of the accommodation cavity (211).

8. The potting structure according to claim 7, wherein, in a circumferential direction around the accommodation opening (212), the glue retaining strip (22) is disposed on all surrounding sidewalls (214), and all the glue retaining strips (22) are at equal distances from the bottom wall (213).

9. The potting structure according to claim 7 or 8, wherein the glue retaining strip (22) is detachably connected to the sidewall (214).

10. The potting structure according to any one of claims 7 to 9, wherein a surface of the glue retaining strip (22), away from the bottom wall (213), is at a preset distance from the end face (215).

11. The potting structure according to any one of claims 1 to 10, wherein the box (21) is of a hollow cuboidal structure opened at one end, a cross-sectional shape of the accommodation cavity (211) sectioned along a line perpendicular to the first direction is rectangular, and an opening end of the cuboidal structure forms the accommodation opening (212).

12. The potting structure according to any one of claims 1 to 11, wherein, the potting structure further comprises a sealing plug, and the sealing plug is configured to be pluggable into the potting channel (216) through the potting inlet (2163).

13. A battery module, comprising a cell assembly (10), a cover plate (30), and the potting structure according to any one of claims 1 to 12, wherein: the cell assembly (10) is disposed in the accommodation cavity (211) through the accommodation opening (212); the cell assembly (10) abuts on a part of the bottom wall (213); the cell assembly (10), a remaining part of the bottom wall (213), and the sidewall (214) define and form a glue holding space; glue enters the glue holding space through the potting channel (216) to bond the cell assembly (10) and the box (21); and the cover plate (30) covers and fits the box (21).
